# EUROPÄISCHE PATENTSCHRIFT

(11) **EP 1 147 632 B1**
(45) Veröffentlichungstag und Bekanntmachung des Hinweises auf die Patenterteilung: **22.09.2004**
(21) Anmeldenummer: 00903552.8
(22) Anmeldetag: 21.01.2000
(51) Int. Cl.: H04J 3/16

(54) **VERFAHREN ZUM UMSETZEN VON NxSTM-1 SIGNALEN IN STM-N SIGNALE**
METHOD FOR CONVERTING NxSTM-1 SIGNALS INTO STM-N SIGNALS
PROCEDE POUR CONVERTIR DES SIGNAUX NxSTM-1 EN SIGNAUX STM-N

(30) Priorität: 28.01.1999 DE 19903366
(43) Veröffentlichungstag der Anmeldung: 24.10.2001
(73) Patentinhaber: SIEMENS AKTIENGESELLSCHAFT, 80333 München (DE)
(72) Erfinder: MARIGGIS, Athanase, D-81379 München (DE)
(86) Internationale Anmeldenummer: PCT/DE2000/000176
(87) Internationale Veröffentlichungsnummer: WO 2000/045537

(56) Entgegenhaltungen:
- EP-A- 0 543 327
- EP-A- 0 718 996
- WO-A-94/28653

## Beschreibung

Die Erfindung betrifft ein Verfahren gemäß dem Oberbegriff von Patentanspruch 1.

Zeitgemäße Übertragungsverfahren werden in der Regel in Übertragungsverfahren unterteilt, die Informationen nach einem synchronen Transfermodus (STM) oder asynchronen Transfermodus (ATM) übertragen.

Der synchrone Transfermodus STM basiert auf der Übertragung von Informationen in SDH-Übertragungstechnik (Synchrone Digitale Hierarchie). Hierbei werden die zu Informationen in Rahmen (Frame) übertragen. Diese sind in ein Steuerfeld (SOH, Section Overhead; POH, Path Overhead) und ein Containerfeld unterteilt. In ersterem werden die Verbindung betreffende Steuerinformationen übertragen, während in letzerem Nutzdaten (Payload) abgelegt sind. Als Nutzdaten können dabei auch ATM-Zellen verwendet werden.Diese müssen dann zu Beginn des Übertragungsvorgangs in die Rahmenstruktur eingeordnet und empfangsseitig wieder entnommen werden. Als Steuerinformationen kommen beispielsweise Informationen bezüglich der Sicherheit der Übertragung, Bitfehler, Leitungsausfall, Taktgenauigkeit etc. in Betracht.

Das Steuerfeld weist zwei Unterbereiche SOH und POH auf. Der mit SOH bezeichnete Unterbereich weist Steuerinformationen bezüglich eines Übertagungsabschnittes (beispielsweise zwischen zwei Vermittlungseinrichtungen) auf, während in dem mit POH bezeichneten Unterbereich Steuerinformationenen zwischen zwei Teilnehmern (end-to-end) übertragen werden.

Die Übertragung von Informationen mittels der SDH-Übertragungstechnik setzt eine hohe Taktgenauigkeit voraus. Treten während des Übertragungsvorganges Taktungenauigkeiten beispielsweise aufgrund von Laufzeitschwankungen auf oder sind durch unterschiedlichen Ländergegebenheiten unterschiedliche Takte definiert, so verschieben sich die empfangenen Container über die Rahmen hinweg. Ein Rahmen kann daher noch einen Teil der Nutzinformation des letzten Containers sowie einen Teil des eigenen Containers beinhalten.

Bei zeitgemäßen Synchronen Übertragungssystemen werden STM-1 Schnittstellen verwendet. Eine STM-1 Schnittstelle wird physikalisch durch eine Verbindung zwischen zwei SDH-Vermittlunseinrichtungen repräsentiert. Die STM-1 Schnittstelle ist damit die Basis der SDH-Übertragung. Aus diesem Grunde sind die in der SDH-Vermittlunseinrichtung angeordneten SDH-Koppelfelder beim Stand der Technik momentan auf die Durchschaltung von STM-1 Signalen ausgelegt.

Zukünftig sollen aber Signale höherer Ordnung wie STM-N (N>1) Signale übertragen werden. Dadurch ergeben sich Durchschalteprobleme bei den bislang verwendeten SDH-Koppelfeldern. Eine beim Stand der Technik bekannte Methode, diese Probleme zu umgehen ist der Virtual Concatenation Mode. Dabei handelt es sich um eine standardisierte Methode, mit der beispielsweise STM-4 Signale auf 4 STM-1 Signale aufgespalten werden.Während der Übertragung werden damit 4 STM-1 Signale dem empfangenden Switch zugeführt, durchgeschaltet und anschließend wieder zu einem STM-4 Signal zusammengesetzt.

Dabei durchlaufen aber die N x STM-1 Signale unterschiedliche Pfade im Netz. Zwar werden die N x STM-1 Signale gleichzeitig ausgesendet, sie treffen jedoch aufgrund von unterschiedlichen Laufzeiten zu unterschiedlichen Zeiten bei der empfangenden Vermittlungsstelle ein. Das Umsetzen der STM-1 Signale in N x STM-1 Signale erfordert aber ein zeitgleiches Eintreffen der STM-1 Signale. Beim Stand der Technik, werden zur Lösung dieses Problems Speichereinrichtungen wie beispielsweise FIFO Speichereinrichtungen verwendet, um die Container in der richtigen Reihenfolge wieder zu gewinnen. Die FIFO Speichereinrichtungen müssen zu diesem Zweck absolut adressiert werden, was einen erhöhten Aufwand bedeutet, da zum einen die absoluten Adressen stets irgendwo gespeichert sein müssen und zum anderen ein +/- Bereich vorgehalten werden muß. In der Praxis ist damit ein erhöhter Steuerungaufwand verbunden.

WO94/28653 beschreibt ein Verfahren zum Umsetzen von NxSTM-1 Signalen in STM-N Signale in dem, zum Ausgleich von unterschiedlichen Laufzeiten, die STM-1 Signale jeweils einer Schnittstelleinrichtung mit einem Speicher zugeführt werden, die Verzögerung zwischen einer bestimmten Phase der unterschiedlichen STM-1 Signale mit Hilfe eines Referenzsignals gemessen wird, und diese Verzögerung zur Korrektur der Ausleseadressen der Speicher herangezogen wird.

Der Erfindung liegt die Aufgabe zugrunde, einen Weg aufzuzeigen, wie die über unterschiedliche Pfade gesendeten STM-1 Signale empfangsseitig auf praktikable Weise regeneriert und weitergeleitet werden können.

Die Erfindung wird ausgehend von den im Oberbegriff von Patentanspruch 1 angegebenen Merkmalen durch die im kennzeichnenden Teil angegebenen Merkmale gelöst.

Vorteilhaft an der Erfindung ist insbesondere eine relative dynamische Verknüpfung zwischen Schreibadressen und Leseadressen der FIFO Speichereinrichtungen. Dadurch wird eine ständige absolute Kontrolle der Schreib- bzw. Leseadressen überflüssig. Weiterhin ist mit einer derartigen Vorgehensweise ein Gewinn an Dynamik beim Umsetzungsvorgang verbunden.

Vorteilhafte Weiterbildungen der Erfindung sind in den Unteransprüchen angegeben.

Die Erfindung wird im folgenden anhand eines Ausführungsbeispiels näher erläutert. Es zeigen
- FIG 1: ein SDH-Container gemäß des Standes der Technik
- FIG 2: die Container einer STM-4-Schnittstelle
- FIG 3: eine Schaltungsanordnung auf der das erfindungsgemäße Verfahren zum Ablauf gelangt
- FIG 4: das Auslesen der Nutzdaten aus den FIFO Speichereinrichtungen gemäß dem erfindungsgemäßen Verfahren
- FIG 5: die in den FIFO Speichereinrichtungen zu unterschiedlichen Zeiten eintreffenden Markierungen.

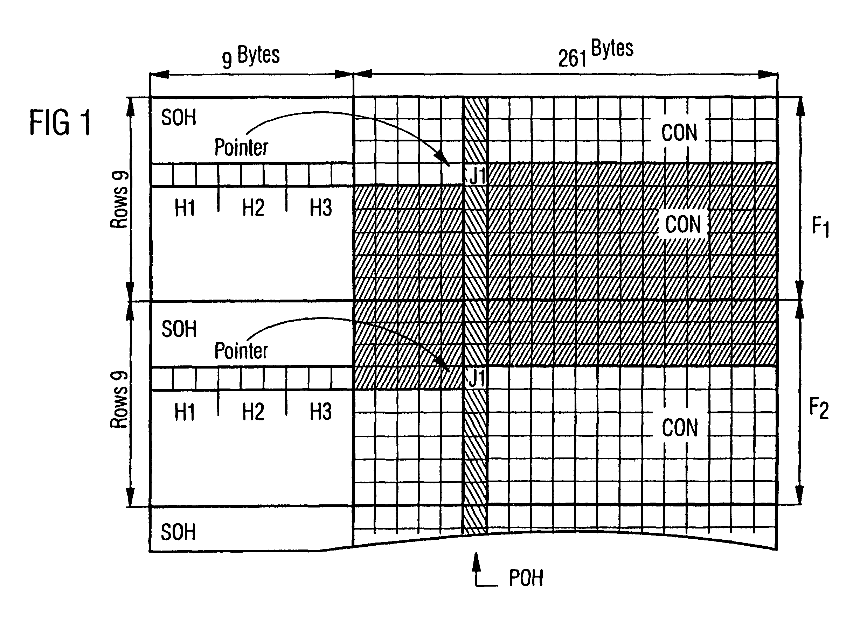

In Fig 1 ist die Struktur eines SDH-Übertragungsrahmens aufgezeigt. Demgemäß sind beispielhaft zwei SDH-Rahmen F₁, F₂ aufgezeigt. Die Steuerinformationen sind in den Steuerfeldern SOH, POH abgelegt. Die Nutzinformationen werden in einem Container CON übertragen. Gemäß voranstehendem Ausführungsbeispiel soll es sich dabei um einen virtuellen Container VC-4 handeln. Dies bedeutet, daß die hier übertragenen Nutzinformationen mit einer Nutzdatenbitrate von 149 Mbit/s übertragen werden.

Ein Rahmen ist aus insgesammt 9 Zeilen aufgebaut. Das Steuerfeld SOH weist pro Zeile eine Breite von 9 Byte auf. Der Container CON weist pro Zeile eine Breite von 260 Byte und das Steuerfeld POH 1 Byte pro Zeile auf. Insgesamt ergibt sich damit für einen SDH-Rahmen eine Größe von 2430 Bytes (9x (9+1+260)), wobei 2340 Bytes für die Übertragung von Nutzdaten vorgesehen sind.

Mit einer Markierung J₁ wird der Anfang des Containers CON in dem betreffenden Rahmen bezeichnet. Die Lage der Markierung J₁ wird in einem speziellen Pointerfeld H₁, H₂, H₃ des Steuerfeldes SOH abgespeichert, wodurch ein Zeiger gebildet wird. Dieser Zeiger verweist auf die Lage der Markierung J₁. Die im Steuerfeld SOH abgelegten Steuerinformationen werden stets an derselben Stelle abgelegt. Aufgrund von Taktungenauigkeiten kann der Container CON über die Rahmengrenzen F₁, F₂ hinwegwandern. Gleiches gilt damit auch für das Steuerfeld POH. In Fig 1 markiert die Markierung J₁ den Anfang des Containers CON des Rahmens F₁. Der Anfang des Containers des Rahmens F₂ wird durch eine weitere Markierung J₁ des Rahmens F₂ definiert. Damit sind die im Container des Rahmens F₁ enthaltenen Nutzdaten über die Rahmengrenzen hinweg gleichfalls Teil des Rahmens F₂.

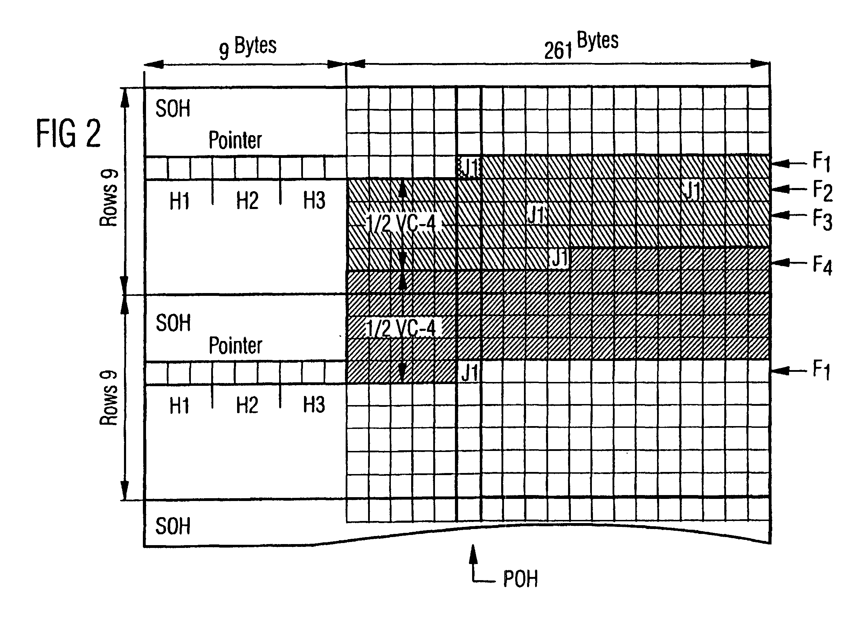

In Fig 2 sind die Verhältnisse für eine STM-4 Schnittstelle aufgezeigt. Die STM-4 Signale sind hier in 4 STM-1 Signale aufgespalten worden. Aufgund von Taktungenauigkeiten findet auch hier ein Wandern der Container über Rahmengrenzen hinweg statt. Der Beginn der einzelnen Container ist in Fig 2 durch 4 J₁ Zeiger aufgezeigt, die zu den Rahmen F₁...F₄ gehören. Dies hat seinen Ursprung darin, daß die 4 STM-1 Signale zwar gleichzeitig ausgesendet wurden, allerdings auf den jeweiligen Wegen Laufzeitunterschiede erfahren haben. Aus diesem Grund sind diese Signale auch an unterschiedlihcen Speicherbereichen der als FIFO ausgebildeten Pufferspeicher zum Liegen gekommen. Um die 4 STM-1 Signale wieder zu einem STM-4 Signal umzusetzen, bedarf es eines zeitsynchronen Umsetzens, da nur in diesem Fall das STM-4 Signal sichergestellt ist.

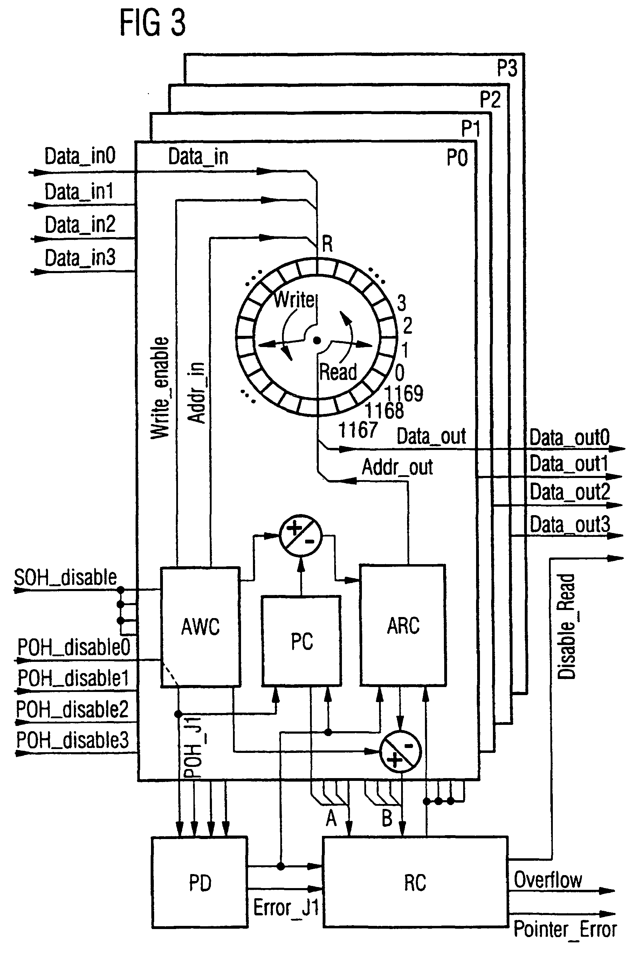

In Fig 3 ist eine Schaltungsanordnung offenbart, mit der die Wiederherstellung eines STM-4 Signals aus 4 STM-1 Signalen erreicht wird. Demgemäß sind 4 Schnittstelleneinrichtungen P₀...P₃ aufgezeigt. Jede dieser 4 Schnittstelleneinrichtungen P₀...P₃ dient empfangsseitig als Abschluß der Verbindungsleitung, über die jeweils das STM-1 Signal übertragen werden. Da die in den Steuerfeldern SOH, POH übertragenen Steuerdaten STM-1 spezifisch sind, müssen diese Informationen beim Umsetzen in ein STM-4 Signal ausgeblendet werden.

Eingangsseitig werden den 4 Schnittstelleneinrichtungen P₀.. ..P₃ die STM-1 Signale Data_in0...Data_in3 zugeführt. Der Schnittstelleneinrichtung P₀ werden somit die STM-1 Signale Data_in0 zugeführt, der Schnittstelleneinrichtung P₁ die STM-1 Signale Data_in1 etc. Diese STM-1 Signale werden daraufhin überprüft, ob die ankommenden Informationen Nutzinformationen oder Steuerinformationen sind. Im Steuerfeld SOH wird ein Synchronisationswort mitübertragen, auf das sich der Rahmen jeweils aufsynchronisiert. Wird dieses Synchronwort empfangen, wird ein Signal SOH_disable aktiviert und der betreffenden Schnittstelleneinrichtung zugeführt. Das 3. Wort im Steuerfeld SOH ist als Zeiger ausgebildet, das auf die Markierung J₁ zeigt. Wird dieser detektiert, wird ein Signal POH_disable aktiviert und ebenfalls der betreffenden Schnittstelleneinrichtung zugeführt.

Weiterhin weist jede der 4 Schnittstelleneinrichtungen P₀..P₃ einen zyklischen Ringspeicher R auf. Dieser ist als Speicher mit wahlfreiem Zugriff (RAM) ausgebildet und weist die Funktion eines FIFO-Speichers auf. Die Breite dieses Ringspeichers R beträgt in der Regel mit jeweils 1170 Byte die Hälfte eines Containers CON. Ferner ist auf jeder der Schnittstelleneinrichtungen jeweils ein Zähler AWC vorgesehen, in dem die die Nutzdatenbytes nach Maßgabe des Zustandes des Signals SOH-disbale gezählt werden. Wenn die beiden Signale SOH_disable, POH_disable inaktiv sind, wird dieser Zählerstand ausgelesen und dem Ringspeicher R über ein Signal Addr_in zugeführt. Zeitgleich hierzu wird ein Signal Write_enable zugeführt. Der Zählerstand des Zählers AWC gibt somit die Speicheradresse im Ringspeicher R wieder, unter der die betreffenden Nutzdatenbytes abgespeichert werden. Ferner ist in jeder der 4 Schnittstelleneinrichtungen P₀...P₃ ein Zähler PC vorgesehen, der bei Detektieren der Markierung J₁ um die eintreffenden Nutzdatenbytes inkrementiert wird. In einem weiteren Zähler ARC, der ebenfalls in jeder der 4 Schnittstelleneinrichtungen P₀...P₃ angeordnet ist, wird nach Maßgabe des Zählerstandes der Zähler AWC, PC die Adresse des Ringspeichers R abgespeichert, unter der die Nutzdatenbytes wieder ausgelesen werden.

Als übergeordnete Einrichtungen der 4 Schnittstelleneinrichtungen P₀...P₃ werden die Einrichtungen PD, RC verwendet. Bei ersterer handelt es sich um eine Überwachungseinrichtung, von der ermittelt wird, ob die Markierungen J₁ aller 4 Schnittstelleneinrichtungen P₀...P₃ detektiert wurden. Bei der Einrichtung RC handelt es sich um eine übergeordnete Steuerlogik, die die Lesevorgänge steuert und überwacht.

Die Funktionsweise der Schaltung sei im folgenden kurz erläutert:

Die STM-1 Signale Data_in0...Data_in3 werden von der betreffenden Schnittstelleneinrichtung übernommen. Ist das Signal SOH_disable inaktiv, wird von dem Zähler AWC ein Signal Write_enable aktiviert. Zeitgleich hierzu wird der Zähler AWC um die Anzahl der ankommenden Nutzdatenbytes inkrementiert. Der derart erhaltene Wert wird über ein Signal Addr_in dem Ringspeicher R zugeführt und wird von diesem als Adresse interpretiert. Nach Maßgabe dieser Adresse werden die Daten Data_in im Ringspeicher R abgelegt. Durch die Verknüpfung (ODER-Verknüpfung) der Signale SOH_disable, POH_disable (Write_enable) werden ausschließlich Nutzdaten in den Ringspeicher R übernommen. Die in der Steuerfeldern SOH, POH gespeicherten Informationen werden damit ausgeblendet.

Bei Inbetriebnahme sind die Signale POH_J₁ aller Schnittstelleneinrichtungen P₀..P₃ auf "0" gesetzt. Wird das Signalisierungssignal für die Markierung J₁ der betreffenden Schnittstelleneinrichtung detektiert, wird der Zähler PC durch das Signal POH_disable gestartet. Das Signal POH_J₁ der entsprechenden Schnittstelleneinrichtung wird dann auf logisch "1" (HIGH) gesetzt. Solange das Signal POH_J₁ den Zustand logisch "1" einnimmt, werden die Nutzdatenbytes gezählt. Sind die Markierungen J₁ von allen Schnittstelleneinrichtungen P₀...P₃ empfangen worden, sind dann alle Signale POH_J₁ auf logisch "1" gesetzt. Dadurch werden von der Überwachungseinrichtung PD logische Verknüpfungsoperationen veranlaßt sowie die Differenz der Zählerstände AWC und PC gebildet, um 1 vermindert und in den Zähler ARC geladen. Von der Überwachungseinrichtung PD werden nun alle Signale POH_J₁ für den nächsten Zyklus auf 0 gesetzt. Ferner wird bei Gleichheit der Zählerstände der Zähler AWC und ARC der Lesevorgang in allen Schnittstelleneinrichtungen gestoppt und ein Signal Disable_read generiert, weil auf mindestens einer der Schnittstelleneinrichtungen P₀...P₃ keine Nutzdaten im Ringspeicher R vorhanden sind.

Im Detail wird folgendermaßen vorgegangen:

Es werden die Zählerstande der Zähler AWC und PC ermittelt. Die Differenz beider Zählerstände wird um 1 vermindert und das Ergebnis in den Zähler ARC gespeichert. In dem Moment, wo alle Markierungen J₁ eingetroffen sind, ist damit im Zähler PC die relative Laufzeitdifferenz der STM-1 Signale zu dem zuletzt eingetroffenen STM-1 Signale gegeben.

Die Zähler ARC aller Schnittstelleneinrichtungen werden nun angestoßen, den Inhalt dem Ringspeicher R über jeweils ein Signal Addr_out zu übergeben. Von diesem wird dieser Wert als Adresse interpretiert. Die unter dieser Adresse gespeicherten Daten werden ausgelesen und als Ausgangsdaten Data_out als STM-4 Signal weitergeleitet.

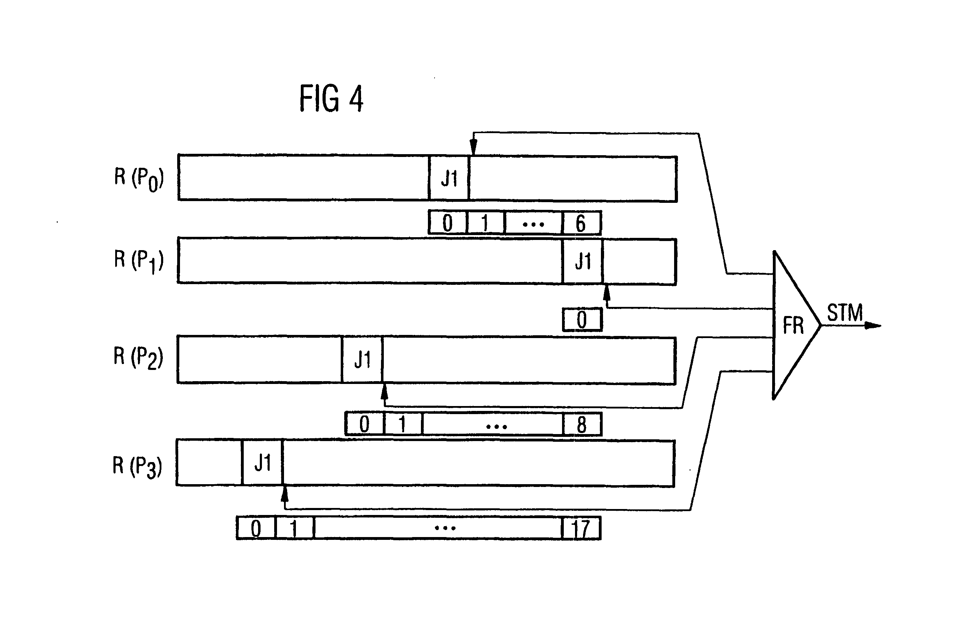

Die entsprechenden Verhältnisse sind in Fig 4 wiedergegeben. Demgemäß sind die 4 zyklischen Ringspeicher R der 4 Schnittstelleneinrichtungen R(P₀)...R(P₃) aufgezeigt. Als letzte Markierung soll beispielhaft die Markierung J₁ der Schnittstelleneinrichtungen P₁ eingetroffen sein. Alle Zähler werden nun angehalten. Im folgenden wird nun die relative Adresse zu den Markierungen J₁, die in den verbleibenden 3 Schnittstelleneinrichtungen gespeichert sind, gebildet. Im Falle der Schnittstelleneinrichtungen R(P₀) beträgt die Differenz 6 Nutzdatenbytes. Im Falle der Schnittstelleneinrichtung P₂ beträgt die Differenz 8 Nutzdatenbytes, und im Falle der Schnittstelleneinrichtung P₃ beträgt die Differenz 17 Nutzdatenbytes. Unter Anstoß der übergeordneten Logikeinrichtung RC werden die Nutzdaten ausgelesen und einem STM-4 Framer FR zugeführt, der aus den 4 STM-1 Signalen 1 STM-4 Signal regeneriert.

Voraussetzung für dieses Verfahren ist, daß die Markierungen J: aller STM-1 Signale innerhalb einer halben VC-4 Periode eintreffen. Die entprechenden Verhältnisse sind in Fig 2 für das Beispiel von 4 STM-1 Signalen aufgezeigt. Die Markierungen J₁ kommen innerhalb der VC-4 Periode zum Liegen. Aus diesem Grund können sich die Schnittstellenschaltungen ohne zusätzliche Signalauswertung synchronisieren. Beispielsweise soll - wie bei Fig 2 beschrieben - die Markierung J₁ des Rahmens F₃ der Schnittstelleneinrichtung P₃ zuerst eintreffen. Der Zähler PC wird dann gestartet und zählt bis 1170 hoch. Werden bis dahin keine weitere Markierungen J₁ der verbleibenden Container CON detektiert, werden alle Zähler PC und alle Signale POH_J₁ zurückgesetzt und beim nächsten Zyklus beginnt die Synchronisierung wieder ordnungsgemäß mit der Markierung J₁ des Rahmens F₁.

Gemäß vorliegendem Ausführungsbeispiel wurde davon ausgegangen, daß die Größe der Laufzeitunterschiede kleiner als die halbe Containerperiode eines virtuellen VC-4 Containers ist. Aber auch Laufzeitunterschiede, die größer als die halbe Containerperiode eines virtuellen VC-4 Containers sind, können mit einer Modifizierung des Verfahrens behandelt werden.

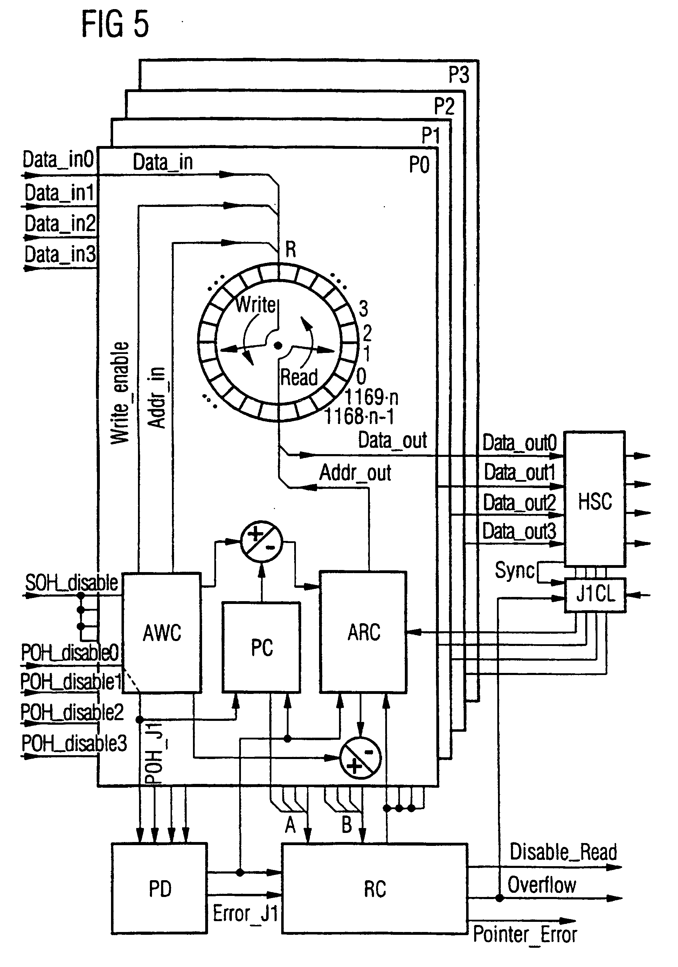

Die Schnittstelleneinrichtung gemäß Fig 3 kann sich trotzdem synchronisieren, wenn die Nutzdaten im Container strukturiert sind. In diesem Fall muß der Ringspeicher R entsprechend der am größten zu erwartenden Verzögerung vergrößert werden. Die entsprechenden Verhältnisse sind in Fig 5 aufgezeigt. Dies ist beispielsweise der Fall, wenn die Nutzdaten aus ATM-Zellen, Frame Relay oder TCP/IP Daten bestehen. Bei derartigen Übertragungsformaten kann die Synchronisierung durchgeführt werden, weil eine fehlerfreie Übertragung durch das Steuerfeld SOH detektiert wird und in diesem Fall der Header der Zelle durch eine zusätzliche, dem Ubertragungsformat entsprechende Payload Synchronisierschaltung detektiert und ausgewertet wird. Die Synchronisierschaltung ist in Fig 5 mit HSC bezeichnet. Die Synchronisierung kann dadurch wiederhergestellt werden, indem die Pointer von 2 oder mehreren VC-4 Containern (dies sind im Falle von STM-4 4 Pointer) solange kombiniert werden, bis die Payload Synchronisierschaltung HSC einrastet. Hierbei kann die Kombination aus einer einfachen Addition von 2340 Bytes in den Zähleinrichtungen der Zähler ARC - angestoßen durch eine Einrichtung J₁CL (J₁ Combine Logik) - erfolgen, da bei Auffinden mehrere Markierungen J₁ nicht sicher festgestellt werden kann, zu welchem Rahmen diese Markierung gehört. Die Differenz zwischen 2 Markierungen J₁ derselben Schnittstelleneinrichtung beträgt 2340 Nutzdatenbytes. Nach Einrasten der Payload Synchronisierschaltung HSC findet keine Kombination der Markierungen J₁ statt, weil gemäß dem SDH Standard nur 3 Byte Sprünge erlaubt sind, es sei denn, das System wird erneut initialisiert.

## Patentansprüche

1. Verfahren zum Umsetzen von NxSTM-1 Signalen in STM-N Signale, bei dem
eine Mehrzahl (N) von STM-1 Signalen (Date_in0...Date_inN), die jeweils ein erstes und zweites Steuerfeld (SOH, POH) sowie ein aus mit Nutzdaten gefülltes Nutzdatenfeld (CON) aufweisen, dessen Beginn durch eine Markierung (J₁) definiert wird, einer Mehrzahl (N) von jeweils einen Speicher (R) aufweisenden Schnittstelleneinrichtungen (P₀...P_{N}) , die der Aufnahme der Mehrzahl (N) von STM-1 Signalen (Date_ in0 ...Date_inN) dienlich sind zugeführt wird
**dadurch gekennzeichnet,**
**daß** die Nutzdaten der Mehrzahl (N) von STM-1 Signalen in den Speicher (R) der jeweils zugeordneten Schnittstelleneinrichtung (P₀..P_{N}) unter einer, der Anzahl der eingetroffenen Nutzdaten entsprechenden Schreibadresse in einer zyklischen Reihenfolge abgelegt werden,
**daß** eine relative Adresse, ausgehend von der zuletzt eingetroffenen Markierung (J₁) zu den bis dahin eingetroffenen Markierungen (J₁) gebildet wird, und
**daß** unter der derart gebildeten relativen Adresse die Nutzdaten den Speichern (R) der jeweils zugeordneten Schnittstelleneinrichtung (P₀..P_{N}) in derselben zyklischen Reihenfolge wie beim Schreibvorgang wieder entnommen und als Ausgangsdaten (Data_out0...Data_outN) einem STM-N Framer (FR) zugeführt werden.

2. Verfahren nach Anspruch 1,
**dadurch gekennzeichnet,**
**daß** die Schreibadresse im Speicher (R) durch Inkrementieren nach Maßgabe der Anzahl der eingetroffenen Nutzdaten in einer ersten Zähleinrichtung (AWC) gebildet wird, bis das erste Steuerfeld (SOH) oder das zweite Steuerfeld (POH) detektiert wird, und der Zählerstand der ersten Zähleinrichtung (AWC) dem Speicher (R) übergeben wird.

3. Verfahren nach Anspruch 1,
**dadurch gekennzeichnet,**
**daß** die Nutzdaten in einer zweiten Zähleinrichtung (PC) von dem Moment an gezählt werden, wo das zweite Steuerfeld (POH) detektiert wird bis zu dem Zeitpunkt wo alle Markierungen
(J₁) eingetroffen sind, und anschließend die Differenz der Zählerstände der ersten und zweiten Zähleinrichtung (AWC, PC) gebildet wird, die noch um 1 vermindert wird, und der derart berechnete Wert als Leseadresse einer dritten Zähleinrichtung (ARC) übergeben wird, unter der die im Speicher (R) gespeicherten Nutzdaten entnommen werden.

4. Verfahren nach einem der Ansprüche 1 bis 3,
**dadurch gekennzeichnet,**
**daß** der Speicher (R) als zyklischer Ringspeicher mit wahlfreiem Zugriff ausgebildet ist.

5. Verfahren nach einem der Ansprüche 1 bis 4,
**dadurch gekennzeichnet,**
**daß** die Synchronisierung der Schnittstelleneinrichtungen (P₀..P_{N}) innerhalb der halben Periode eines VC-4 Containers (CON) erfolgt.

6. Verfahren nach einem Anspruch 1 bis 4,
**dadurch gekennzeichnet,**
**daß** die Synchronisierung der Schnittstelleneinrichtungen (P₀..P_{N}) außerhalb der halben Periode eines VC-4 Containers (CON) erfolgt, indem eine Kombination der Pointer von wenigstens 2 VC-4 Containern solange vorgenommen wird, bis eine, den Schnittstelleneinrichtungen (P₀...P_{N}) nachgeschaltete, strukturierte Nutzdaten ermittelnde Synchronisierschaltung (HSC) einrastet.

## Claims

1. Method for converting NxSTM-1 signals into STM-N signals, in which
a multiplicity (N) of STM-1 signals (data_in0...data_inN) which in each case have a first and second control field (SOH, POH) and a payload field (CON) filled with payload, the beginning of which is defined by a marker (J₁), are fed to a multiplicity (N) of interface devices (P₀...P_{N}) which in each case have a store (R) and which are used for accommodating the multiplicity (N) of STM-1 signals (data_in0...data_inN),
**characterized in that**
the payload of the multiplicity (N) of STM-1 signals is stored in a cyclic order in the store (R) of the in each case associated interface device (P₀...P_{N}) at a write address corresponding to the number of payload data which have arrived,
a relative address is formed with respect to the markers (J₁) which have arrived until then, on the basis of the marker (J₁) which has arrived last, and
at the relative address formed in this manner, the payload is removed again from the stores (R) of the in each case associated interface device (P₀...P_{N}) in the same cyclic order as during the write process and is supplied to an STM-N frame (FR) as output data (data_out0...data_outN).

2. Method according to Claim 1,
**characterized in that**,
the write address in the store (R) is formed by incrementing in a first counting device (AWC) as determined by the number of payload data that have arrived, until the first control field (SOH) or the second control field (POH) is detected, and the count of the first counting device (AWC) is transferred to the store (R).

3. Method according to Claim 1,
**characterized in that**,
the payload data are counted in a second counting device (PC) from the instant where the second control field (POH) is detected until the time where all markers (J₁) have arrived, and then the difference between the counts of the first and second counting device (AWC, PC) is formed, which is further decremented by 1, and the value calculated in this manner is transferred as read address to a third counting device (ARC) at which the payload stored in the store (R) is removed.

4. Method according to any of Claims 1 to 3,
**characterized in that**,
the store (R) is constructed as a cyclic random-access circular buffer.

5. Method according to any of Claims 1 to 4,
**characterized in that**,
the interface devices (P₀...P_{N}) are synchronized within one half period of a VC-4 container (CON).

6. Method according to any of Claims 1 to 4,
**characterized in that**,
the interface devices (P₀...P_{N}) are synchronized outside the half period of a VC-4 container (CON) by combining the pointers of at least two VC-4 containers until a synchronization circuit (HSC) which follows the interface devices (P₀...P_{N}) and determines structured payload data acquires lock.

## Revendications

1. Procédé pour convertir des signaux NxSTM-1 en signaux STM-N, dans lequel une pluralité (N) de signaux STM-1 (Date_in0 ... Date_inN), lesquels comportent respectivement un premier et un deuxième champ de commande (SOH, POH) ainsi qu'un champ de données utiles (CON) rempli de données utiles, dont le début est défini par un marquage (J₁), est amenée à une pluralité (N) de dispositifs d'interface (P₀ ... P_{N}) comportant respectivement une mémoire (R), lesquels servent à la prise de la pluralité (N) de signaux STM-1 (Date_in0 ... Date_inN), **caractérisé en ce que** les données utiles de la pluralité (N) de signaux STM-1 sont déposées, par ordre cyclique, dans la mémoire (R) du dispositif d'interface respectif associé (P₀ ... P_{N}) sous une adresse d'enregistrement qui correspond au nombre des données utiles qui sont arrivées, **en ce que**, partant du marquage (J₁) arrivé en dernier lieu, une adresse relative est constituée pour les marquages (J₁) arrivés jusque-là et **en ce que**, sous l'adresse relative ainsi constituée, les données utiles sont de nouveau prélevées dans les mémoires (R) du dispositif d'interface respectif associé (P₀ ... P_{N}) dans le même ordre cyclique que lors de l'opération d'enregistrement et sont amenées à un framer STM-N (FR) en tant que données de sortie (Data_out0 ... Data_outN).

2. Procédé selon la revendication 1, **caractérisé en ce que** l'adresse d'enregistrement dans la mémoire (R) est constituée par incrémentation, selon le nombre des données utiles arrivées, dans un premier dispositif de comptage (AWC) jusqu'à ce que le premier champ de commande (SOH) ou le deuxième champ de commande (POH) soit détecté et l'état du compteur du premier dispositif de comptage (AWC) est communiqué à la mémoire (R).

3. Procédé selon la revendication 1, **caractérisé en ce que** les données utiles sont comptées, dans un deuxième dispositif de comptage (PC), à partir du moment où le deuxième champ de commande (POH) est détecté jusqu'au moment où tous les marquages (J₁) sont arrivés, et ensuite la différence des états du compteur du premier et du deuxième dispositif de comptage (AWC, PC) est formée, laquelle est encore réduite de 1, et la valeur ainsi calculée est communiquée à un troisième dispositif de comptage (ARC) en tant qu'adresse de lecture sous laquelle les donnés utiles enregistrées dans la mémoire (R) sont prélevées.

4. Procédé selon l'une des revendications 1 à 3, **caractérisé en ce que** la mémoire (R) est configurée comme une mémoire annulaire cyclique avec accès aléatoire.

5. Procédé selon l'une des revendications 1 à 4, **caractérisé en ce que** la synchronisation des dispositifs d'interface (P₀ ... P_{N}) se fait à l'intérieur de la demi-période d'un conteneur VC-4 (CON).

6. Procédé selon l'une des revendications 1 à 4, **caractérisé en ce que** la synchronisation des dispositifs d'interface (P₀ ... P_{N}) se fait en dehors de la demi-période d'un conteneur VC-4 (CON) par une combinaison des pointeurs d'au moins 2 conteneurs VC-4 jusqu'à l'enclenchement d'un circuit de synchronisation (HSC) monté en aval des dispositifs d'interface (P₀ ... P_{N}) et déterminant des données utiles structurées.
